(19) Europäisches Patentamt
European Patent Office
Office européen des brevets

(11) Publication number: **0 132 853 B1**

(12) # EUROPEAN PATENT SPECIFICATION

(45) Date of publication of patent specification: **27.03.91** (51) Int. Cl.5: **C08G 59/52**, C08J 5/24

(21) Application number: **84200108.3**

(22) Date of filing: **27.01.84**

The file contains technical information submitted after the application was filed and not included in this specification

(54) **Preimpregnated reinforcements and high strength composites therefrom.**

(30) Priority: **21.06.83 US 506389**

(43) Date of publication of application:
**13.02.85 Bulletin 85/07**

(45) Publication of the grant of the patent:
**27.03.91 Bulletin 91/13**

(84) Designated Contracting States:
**AT BE CH DE FR GB IT LI LU NL SE**

(56) References cited:
**GB-A- 1 182 377**

(73) Proprietor: **AMOCO CORPORATION**
**200 East Randolph Drive P.O. Box 87703**
**Chicago Illinois 60680-0703(US)**

(72) Inventor: **Qureshi, Shahid**
**553 Village Drive**
**Edison New Jersey 08817(US)**

(74) Representative: **van der Beek, George Frans, Ir. et al**
**Nederlandsch Octrooibureau Scheveningseweg 82 P.O. Box 29720**
**NL-2502 LS 's-Gravenhage(NL)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

Advanced composites are high strength, high modulus materials which are finding increasing use as structural components in aircraft, automotive, and sporting goods applications. Typically they comprise structural fibers such as carbon fibers in the form of woven cloth or continuous filaments embedded in a thermosetting resin matrix.

Most advanced composites are fabricated from prepreg, a ready-to-mold sheet of reinforcement impregnated with uncured or partially cured resin. Resin systems containing an epoxide resin and aromatic amine hardener are often used in prepreg since they possess the balance of properties required for this composite fabrication process. State of the art epoxy/carbon fiber composites have high compressive strengths, and good fatigue characteristics. and low shrinkage during cure. However, since most epoxy formulations used in prepreg are brittle, these composites have low toughness, which results in poor impact resistance and tensile properties which do not fully translate the properties of the reinforcing fiber. Thus there is a need for resin systems which afford composites with improved tensile and impact properties in combination with the compressive strengths typical of this class of materials.

GB.A-1,182,377 describes a composition which contains a specific group of hardeners and polyepoxides having more than one epoxide group per molecule, if desired, in combination with additives, like glass fibres. As hardener an aromatic polyamine is used, which corresponds to the general formula

$$R(-O-\underset{\underset{O}{\|}}{C}-Ar-NHR')_n$$

in which R represents the radical formed after elimination of the hydroxylgroup of a polyhydric aliphatic, cycloaliphatic or araliphatic alcohol, Ar represents an optionally substituted phenylene or naphtylene radical, R' represents hydrogen or an alkyl radical and n represents an integer from 2 to 10.

According to the present invention it was found that beneficial effects as to the viscosity and film strength characteristics of the epoxy/hardener mixture can be obtained.

The present invention is directed to a composition comprising

(a) an epoxy resin

(b) a diamine of the formula

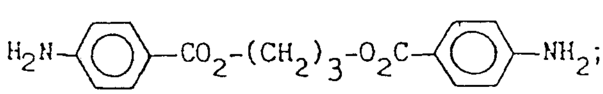; and

(c) a thermoplastic polymer. The diamines may be used in combination with conventional aromatic diamines. Examples of conventional diamines include 4,4'-diaminodiphenyl ether, 4,4'-diaminodiphenyl methane, 3,3'-diaminodiphenyl methane, 4,4'-diaminodiphenyl sulfone, 3,3'-diaminodiphenyl sulfone. 3,3'-diaminobenzophenone, m-phenylenediamine, p-phenylenediamine, 4,4'-diaminodiphenylpropane, 4,4'-diaminodiphenyl sulfide, 1,4-bis(p-aminophenoxy)benzene. 1,4-bis(m-aminophenoxy)benzene, 1,3-bis-(m-aminophenoxy)benzene, 1,3-bis(p-aminophenoxy) benzene, 4,4'-bis(3-aminophenoxy)diphenyl sulfone. and 4,4'bis(4-aminophenoxy)diphenyl sulfone. Also, the hardeners of this invention may be used in combination with the diamine hardeners disclosed in U.S. Patent No. 4,517,321 filed on May 20, 1983 in the name of H. C. Gardner et al.

The epoxy resins which may be used herein contain two or more epoxy groups having the following formula:

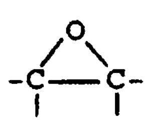

The epoxy groups can be terminal epoxy groups or internal epoxy groups. The epoxides are of two general types: polyglycidyl compounds or products derived from epoxidation of dienes or polyenes. Polyglycidyl compounds contain a plurality of 1,2-epoxide groups derived from the reaction of a polyfunctional active hydrogen containing compound with an excess of an epihalohydrin under basic conditions. When the active hydrogen compound is a polyhydric alcohol or phenol, the resulting epoxide composition contains glycidyl

ether groups. A preferred group of polyglycidyl compounds are made via condensation reactions with 2,2-bis(4-hydroxyphenyl) propane, also known as bisphenol A, and have structures such as II.

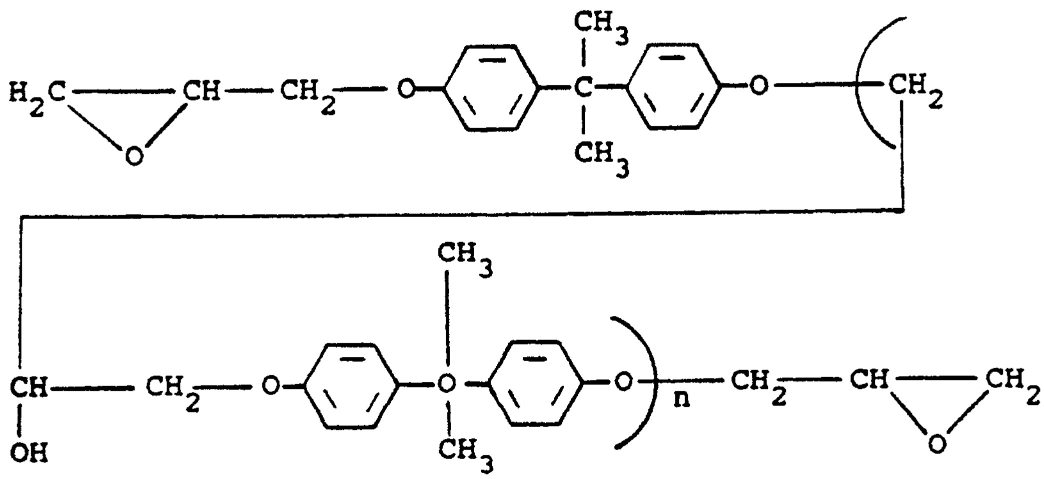

II

where n has a value from about 0 to about 15. These epoxides are bisphenol-A epoxy resins. They are available commercially under the trade names such as "Epon 828," "Epon 1001", and "Epon 1009" from Shell Chemical Co. and as "DER 331", "DER 332", and "DER 334" from Dow Chemical Co. The most preferred bisphenol A epoxy resins have an "n" value between 0 and 10.

Polyepoxides which are polyglycidyl ethers of 4,4'-dihydroxydiphenyl methane, 4,4'-dihydroxydiphenyl sulfone, 4,4'-bisphenol, 4,4'-dihydroxydiphenyl sulfide, phenolphthalein, resorcinol, 4,2'-bisphenol, or tris(4-hydroxyphenyl) methane and the like, are useful in this invention. In addition, EPON 1031 (a tetraglycidyl derivative of 1,1,2,2-tetrakis(hydroxyphenyl)ethane from Shell Chemical Company), and Apogen 101, (a methylolated bisphenol A resin from Schaefer Chemical Co.) may also be used. Halogenated polyglycidyl compounds such as DER. 580 (a brominated bisphenol A epoxy resin from Dow Chemical Company) are also useful. Other suitable epoxy resins include polyepoxides prepared from polyols such as pentaerythritol, glycerol, butanediol or trimethylolpropane and an epihalohydrin.

Polyglycidyl derivatives of phenol-formaldehyde novolaks such as III where n = 0.1 to 8 and cresol-formaldehyde novolaks such as IV where n = 0.1 to 8 are also useable.

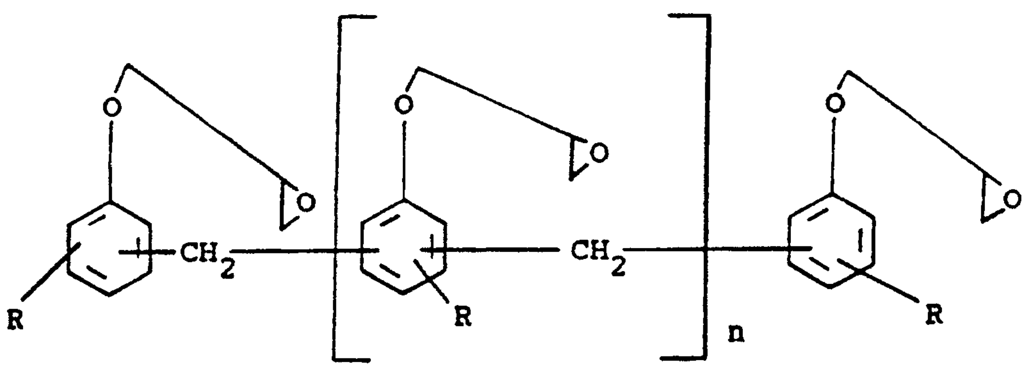

III R = H
IV R = $CH_3$

The former are commercially available as D.E.N 431, D.E.N. 438, and D.E.N. 485 from Dow Chemical Company. The latter are available as, for example, ECN 1235, ECN 1273, and ECN 1299 (obtained from Ciba-Geigy Corporation, Ardsley, NY). Epoxidized novolaks made from bisphenol A and formaldehyde such as SU-8 (obtained from Celanese Polymer Specialties Company, Louisville, KY) are also suitable.

Other polyfunctional active hydrogen compounds besides phenols and alcohols may be used to prepare the polyglycidyl adducts of this invention. These include amines, aminoalcohols and polycarboxylic acids.

Adducts derived from amines include N,N-diglycidyl aniline, N,N-diglycidyl toluidene, N,N,N',N'-tetraglycidylxylylene diamine. (i.e., V) N,N,N',N'-tetraglycidyl-bis (aminomethyl) cyclohexane (i.e. VI) , N,N,N',N'-tetraglycidyl-4,4'-diaminodiphenyl methane, (i.e. VII) N,N,N',N'-tetraglycidyl-3,3'-diaminodiphenyl sulfone, and N,N'-dimethyl-N,N'-diglycidyl-4,4'-diaminodiphenyl methane. Commercially available resins of this type include Glyamine 135 and Glyamine 125 (obtained from F.I.C. Corporation, San Francisco, CA.), Araldite MY-720 (obtained from Ciba Geigy Corporation) and PGA-X and PGA-C (obtained from The Sherwin-Williams Co., Chicago. Illinois).

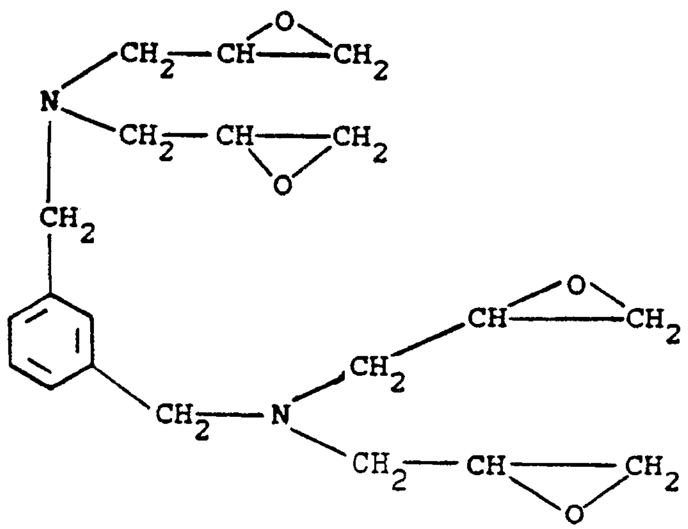

V

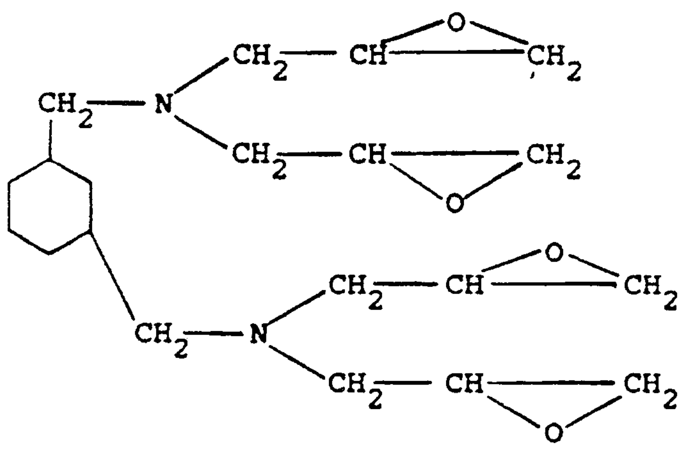

VI

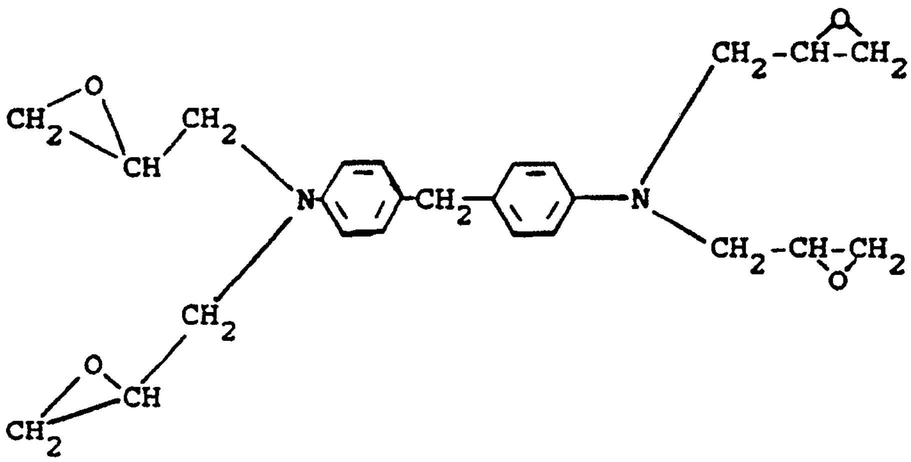

VII

Suitable polyglycidyl adducts derived from amino alcohols include 0,N,N-triglycidyl-4-amino-phenol, available as Araldite 0500 or Araldite 0510 (obtained from Ciba Geigy Corporation) and O,N,N-triglycidyl-3-aminophenol (available as Glyamine 115 from F.I.C. Corporation).

Also suitable for use herein are the glycidyl esters of carboxylic acids. Such glycidyl esters include, for example, diglycidyl phthalate, diglycidyl terephthalate, diglycidyl isophthalate, and diglycidyl adipate. There may also be used polyepoxides such as triglycidyl cyanurates and isocyanurates, N,N-diglycidyl oxamides, N,N'-diglycidyl derivatives of hydantoins such as "XB 2793" (obtained from Ciba Geigy Corporation), diglycidyl esters of cycloaliphatic dicarboxylic acids, and polyglycidyl thioethers of polythiols.

Other epoxy-containing materials are copolymers of acrylic acid esters of glycidol such as glycidyl acrylate and glycidyl methacrylate with one or more copolymerizable vinyl compounds. Examples of such copolymers are 1:1 styrene-glycidyl methacrylate, 1:1 methyl methacrylate-glycidyl acrylate and 62.5:24:13.5 methyl methacrylate:ethyl acrylate:glycidyl methacrylate.

Silicone resins containing epoxy functionality, e.g., 2,4,6,8,10-pentakis [3-(2,3-epoxypropoxy)propyl]-2,4,6,8,10-pentamethylcyclopentasiloxane and the diglycidyl ether of 1,3-bis-(3-hydroxypropyl)-tetramethyldisiloxane) are also useable.

The second group of epoxy resins is prepared by epoxidation of dienes or polyenes. Resins of this type include bis(2,3-epoxycyclopentyl) ether, VIII,

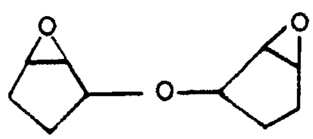

VIII

,

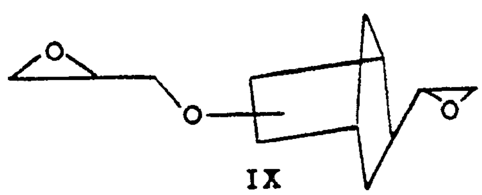

IX

copolymers of VIII with ethylene glycol which are described in U.S. Patent 3,398,102, 5(6)-glycidyl-2-(1,2-epoxyethyl)bicyclo[2.2.1] heptane, IX, and dicyclopentadiene diepoxide. Commercial examples of these epoxides include vinycyclohexene dioxide, e.g., "ERL-4206" (obtained from Union Carbide Corp.), 3,4-epoxycyclohexylmethyl 3,4-epoxycyclohexane carboxylate, e.g., "ERL-4221" (obtained from Union Carbide Corp.), 3,4-epoxy-6-methylcyclohexylmethyl 3,4-epoxy-6-methylcyclohexane carboxylate, e.g., "ERL-420l" (obtained from Union Carbide Corp.), bis(3,4-epoxy-6-methylcyclohexylmethyl) adipate, e.g., "ERL-4289" (obtained from Union Carbide Corp.), dipentene dioxide, e.g., "ERL-4269" (obtained from Union Carbide Corp.) 2-(3,4-epoxycyclohexyl-5,5-spiro-3,4-epoxy)cyclohexanemetadioxane, e.g., "ERL-4234" (obtained from Union Carbide Corp.) and epoxidized poly-butadiene, e.g., "Oxiron 2001" (obtained from FMC Corp.)

Other suitable cycloaliphatic epoxides include those described in U.S. Patents 2,750,395; 2,890,194; and 3,318,822 and the following:

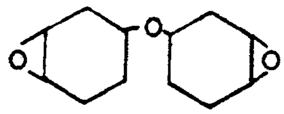 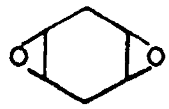 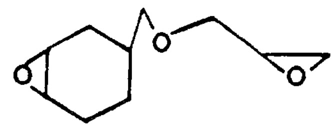

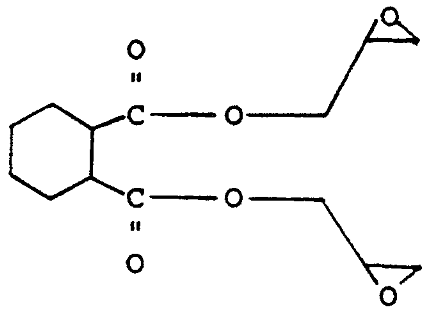 , 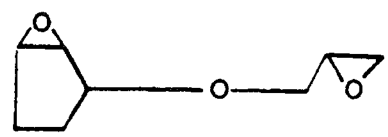

Other suitable epoxides include:

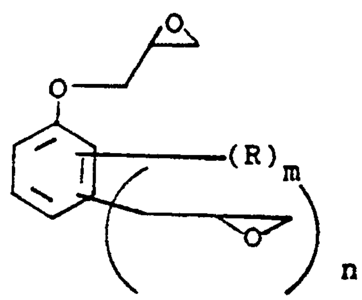 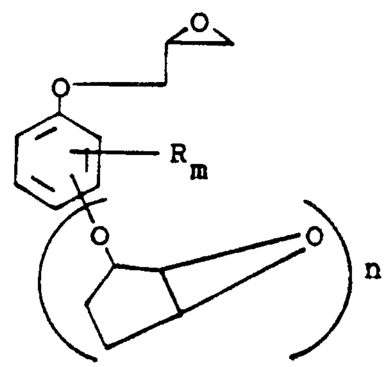

where n is 1 to 4, m is (5-n), and R is H, halogen, or $C_1$ to $C_4$ alkyl.

Reactive diluents containing one epoxide group such as t-butylphenyl glycidyl ether, may also be used. The reactive diluent may comprise up to 25 percent by weight of the epoxide component.

The preferred epoxy resins are N,N,N',N'-tetraglycidyl xylylene diamine, O,N,N-triglycidyl-3-aminophenol, bis (2,3-epoxycylopentyl)ether, bisphenol A epoxy resins of formula II where n is between 0 and 5, epoxidized novolak resins of formulas III and IV where n is between 0 and 3, and mixtures of these with 3,4-epoxy cyclohexylmethyl 3,4-epoxy cyclohexane carboxylate.

The composition of this invention optionally contains a thermoplastic (component c). These materials have beneficial effects on the viscosity and film strength characteristics of the epoxy/hardener mixture (i.e., components a and b)

The thermoplastic polymers used in this invention include polyarylethers of formula X which are described in U.S. Patents 4,108,837 and 4,175,175.

$$-\!\!\left( O-R-O-R' \right)\!\!_n- $$

**X**

wherein R is a residuum of a dihydric phenol such as bisphenol A, hydroquinone, resorcinol, 4,4-bisphenol, 4,4'-dihydroxydiphenyl sulfone, 4,4'-dihydroxy-3.3' and 5,5'-tetramethyldiphenyl sulfide. R' is a residuum of a benzenoid compound susceptible to nucleophilic aromatic substitution reactions such as 4,4'-dichlorodiphenyl sulfone and 4,4'-difluorobenzophenone. The average value of n is from about 8 to about 120.

These polymers may have terminal groups which react with epoxy resins, such as hydroxyl or carboxyl, or terminal groups which do not react.

Other suitable polyarylethers are described in U.S. Patent 3,332,209.

Also suitable are polyhydroxylethers of formula XI.

$$-\!\left(O - R - O - CH_2 - \underset{\displaystyle OH}{\underset{|}{CH}} - CH_2\right)_{n}$$

XI

where R has the same meaning as for Formula X and the average value of n is between about 8 and about 300: and, polycarbonates such as those based on bisphenol A, tetramethyl bisphenol A, 4,4'-dihydroxydiphenyl sulfone, 4,4'-dihydroxy-3,3',5,5'-tetramethyl- diphenyl sulfone, hydroquinone, resorcinol, 4,4'-dihydroxy-3,3',5,5'-tetramethyl diphenyl sulfide, 4,4'-bisphenol 4,4'-dihydroxydiphenyl sulfide, phenolphthalein and, 2,2,4,4-tetramethyl-1,3-cyclobutane diol. Other suitable thermoplastics include poly ($\epsilon$-caprolactone); polybutadiene: polybutadiene/acrylonitrile copolymers, including those optionally containing amine, carboxyl, hydroxy, or -SH groups; polyesters, such as poly(butylene terephthalate); poly(ethylene terephthalate); polyetherimides such as the Ultem resins (obtained from the General Electric Company); acrylonitrile/ butadiene/styrene copolymers, polyamides such as nylon 6, nylon 6.6, nylon 6,12, and Trogamid T (obtained from Dynamit Nobel Corporation): poly(amide imides) such as Torlon poly(amide imide) (obtained from Amoco Chemical Corporation, Napierville, IL); polyolefin, polyethylene oxide; poly-(butyl methacrylate); impact-modified polystyrene; sulfonated polyethylene; polyarylates such as those derived from bisphenol A and isophthalic and terephthalic acid; poly(2,6- dimethyl phenylene oxide); polyvinyl chloride and its copolymers; polyacetals and polyphenylene sulfide.

The composition may additionally contain an accelerator to increase the rate of cure. Accelerators which may be used herein include Lewis acid:amine complexes such as $BF_3$.monoethylamine, $BF_3$.piperidine, $BF_3$.2-methylimidazole; amines, such as imidazole and its derivatives such as 4-ethyl-2-methylimidazole, 1-methylimidazole, 2-methylimidazole; N,N-dimethylbenzylamine; acid salts of tertiary amines, such as the p-toluene sulfonic acid:imidazole complex, salts of trifluoro methane sulfonic acid, such as FC-520 (obtained from 3M Company), and dicyandiamide.

The non-siliceous structural fibers (i.e. component d) which are useful in this invention include carbon, graphite, silicon carbide, poly(benzothiazole), poly(benzimidazole), poly(benzoxazole), alumina, titania, boron, and aromatic polyamide fibers. Also glass fibers can be used. These fibers are characterized by a tensile strength of greater than $6.9.10^5$ MPa , a tensile modulus of greater than $13.8.10^6$ MPa , and a decomposition temperature of greater than 200 °C. The fibers may be used in the form of continuous tows (1000 to 300,000 filaments each), woven cloth, whiskers, chopped fiber or random mat. The preferred fibers are carbon fibers, aromatic polyamide fibers, such as Kevlar 49 fiber (obtained from E.I. duPont de Nemours, Inc., Wilmington, DE), and silicon carbide fibers.

The compositions contain 5 to 70 weight percent, preferably 15 to 50 percent, of hardener (i.e., component a), 10 to 75 percent, preferably 15 to 50 percent, of component b, and up to about 25 percent, preferably up to 15 percent by weight of component c, and 0 to 85 percent, preferably 20 to 80 percent of component d.

Preimpregnated reinforcement may be made from the compositions of this invention by combining components a + b + c with d.

Preimpregnated reinforcement may be prepared by several techniques known in the art. such as wet winding or hot melt. In one method of making impregnated tow or unidirectional tape the fiber is passed into a bath of the epoxy/hardener mixture. A non-reactive, volatile solvent such as methyl ethyl ketone may be optionally included in the resin bath to reduce viscosity. After impregnation, the reinforcement is passed through a die to remove excess resin, sandwiched between plies of release paper, passed through a set of heated rollers, cooled, and taken up on a spool. It is used within a few days or may be stored for months at -17,8 °C.

During prepreg manufacture, the resin system "B-stages", or partially advances.

Composites may be prepared by curing preimpregnated reinforcement using heat and pressure. Vacuum bag/autoclave cures work well with these compositions. Laminates may also be prepared via wet layup followed by compression molding, resin transfer molding, or by resin injection, as described in European Patent Application 0019149 published November 26, 1980. Typical cure temperatures are 37.8 °C to 260 °c, preferably 82 °C to 232 °C.

The compositions of this invention are well suited for filament winding. In this composite fabrication process, continuous reinforcement in the form of tape or tow - either previously impregnated with resin or impregnated during winding - is placed over a rotating and removable form or mandrel in a previously determined pattern. Generally the shape is a surface of revolution and contains end closures. When the

proper number of layers are applied, the wound form is cured in an oven or autoclave and the mandrel removed.

Tacky drapable prepreg can be obtained with a wide variety of epoxy resins. Due to the low room temperature (25° C) reactivity of the hardeners of this invention, long prepreg shelf lives can be obtained, typically one to three weeks.

A preferred resin composition contains greater than 50 percent by weight of N,N,N',N'-tetraglycidyl-4,4'-diaminodiphenyl methane in the epoxide component and the hardener of Formula I (trimethylene glycol di-4-amino benzoate). If additional tack is required, 3,4-epoxy-cyclohexylmethyl 3,4-epoxy cyclohexane carboxylate may be used as a coepoxide.

For filament winding and wet layup, the preferred resin composition comprises epoxy resins selected from bis (2,3-epoxycyclopentyl) ether, bisphenol A epoxy resins of Formula II, where $n = 0$ to 6, N,N,N',N'-tetraglycidylxylylene diamine, epoxidized novolak resins of Formulas III and IV. where $n = 0$ to 3, and O,N,N-triglycidyl-4-aminophenol. The preferred epoxy resin mixtures have viscosities less than 30 Pa.s at 70° C.

For all prepreg and composite formulations, the preferred molar ratio of N-H groups in the hardener to 1,2-epoxide groups in the epoxy resin is 0.7 to 1.3.

The compositions of this invention may be used as aircraft parts such as wing skins, wing-to-body fairings, floor panels, flaps, radomes; as automotive parts such as driveshafts, bumpers, and springs; and as pressure vessels, tanks and pipes. They are also suitable for protective armor on military vehicles and sporting goods applications such as golf shafts, tennis rackets, and fishing rods.

In addition to the non-siliceous structural fibers, the composition may also contain particulate fillers such as talc, mica, calcium carbonate, aluminum trihydrate, glass microballoons, phenolic thermospheres, and carbon black. Up to half of the weight structural fiber in the composition may be replaced by filler. Thixotropic agents such as fumed silica may also be used.

EXAMPLES

The following examples serve to give specific illustrations of the practice of this invention but they are not intended in any way to limit the scope of this invention.

In the examples which follow, the epoxy equivalent weight (EEW) is defined as the grams of epoxy resin per mole of 1,2 epoxide group.

Polysulfone : a polymer of the following formula:

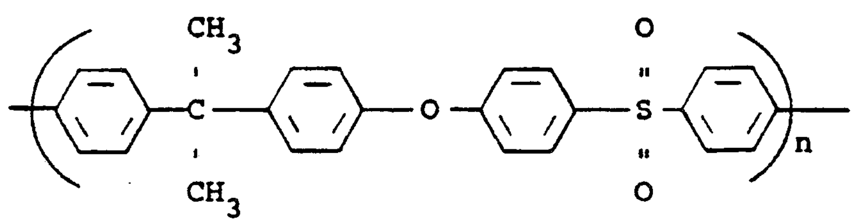

EXAMPLE 1

A thermosetting epoxy resin formulation was prepared by heating together 300.0 g of N,N,N',N'-tetraglycidyl diamino diphenyl methane (EEW 126) (i.e. MY-720 from Ciba Geigy Corp.) with 240.0 g of trimethylene glycol di-4-aminobenzoate.

EXAMPLE 2

A thermosetting epoxy resin formulation was prepared by blending 300.0 g of N,N,N',N'-tetraglycidyl diamino diphenyl methane (EEW 126) with 285.0 g of trimethylene glycol di-4-aminobenzoate.

EXAMPLE 3

A thermosetting epoxy resin formulation was prepared by blending 100.0 g of a bisphenol A epoxy resin (EEW 174) with 45.1 g of trimethylene glycol di-4-aminobenzoate.

EXAMPLE 4

A thermosetting epoxy resin formulation was prepared by blending 87.0 g of a bisphenol A epoxy resin (EEW 174) with 79.0 g of trimethylene glycol di-4-aminobenzoate.

EXAMPLE 5

An epoxy resin formulation was prepared by blending 66.0 g of triglycidyl para-aminophenol (EEW 110) with 07.1 g of trimethylene glycol di-4-aminobenzoate.

EXAMPLE 6

An epoxy resin formulation was prepared by blending 58.0 g of triglycidyl meta-aminophenol (EEW 117) with 38.0 g of trimethylene glycol di-4-aminobenzoate.

EXAMPLE 7

A thermosetting epoxy resin formulation was prepared by blending 60.0 g of tetraglycidyl 1,3-bis (methylamino)cyclohexane (EEW 105) with 36.0 g of trimethylene glycol di-4-aminobenzoate.

EXAMPLE 8

An epoxy resin formulation was prepared by blending 60.0 g of N,N,N',N'-tetraglycidyl diamino diphenyl methane (EEW 102) with 36.0 g of trimethylene glycol di-4-aminobenzoate.

EXAMPLE 9

A thermosetting epoxy resin formulation was made by blending 126.0 g of diglycidyl ester of hexahydrophthalic acid (EEW 126) with 78.0 g of trimethylene glycol di-4-aminobenzoate.

EXAMPLE 10

An epoxy resin blend was prepared by heating together 45.5 g of N,N,N',N'-tetraglycidyl diamino diphenyl methane (EEW 126) with 16.2 g of 3,4-epoxy cyclohexylmethyl-3,4-epoxycyclohexane carboxylate (EEW 137) at 50° C for one hour. A thermosetting epoxy resin formulation was prepared by combining this solution with 54.5 g of trimethylene glycol di-4-aminobenzoate and 0.15 g of an ammonium salt of trifluoromethane sulfonic acid (FC-520 from 3M Company).

EXAMPLE 11

An epoxy resin blend was prepared by heating together 53.3 g of bisphenol A epoxy resin (EEW 182) with 50.0 g of N,N,N'N'-tetraglycidyl diamino diphenyl methane (EEW 126). A thermosetting epoxy resin formulation was prepared by combining this solution with 40.0 g of trimethylene glycol di-4-aminobenzoate.

EXAMPLE 12

An epoxy resin blend was prepared by combining 675.0 g of bisphenol A epoxy resin (EEW 189) with 375.0 g of bis (2,3-epoxycyclopentyl) ether at 50° C for one hour. A thermosetting epoxy resin formulation was prepared by combining 100.0 g of this solution with 59.0 g of trimethylene glycol di-4-aminobenzoate.

EXAMPLE 13

An epoxy resin blend was prepared by heating together 337.5 g of bisphenol A epoxy resin (EEW 182) with 187.5 g of 3,4-epoxycyclohexylmethyl 3,4-epoxycyclo-hexanecarboxylate (EEW 137) at 50° C for one hour. A thermosetting formulation was prepared by mixing 250.0 g of this solution with 147.5 g of trimethylene glycol di-4-aminobenzoate and 1.4 g of trifluoromethane sulfonic acid.

Example 14

A solution was prepared by blending 45 g of Polysulfone P-1800 (available from Union Carbide and having a number average molecular weight of about 24,000) with 168 g of bis(2,3-epoxycyclopentyl)ether and 282 g of a bisphenol A epoxy resin (EEW 189) at 130° C for 1 hour. A 375 g portion of this solution was blended with 201 g of trimethylene glycol di-4-aminobenzoate to produce a thermosetting epoxy resin formulation.

EXAMPLES 15 TO 28

Unreinforced castings were prepared from the formulations described in Example 1 to 14. Typical castings weighed 100 to 150 g and were made using the proportions given in the above examples. Casting dimensions were 3.2 x 177.8 x 101.6 to 152.4 mm.

The general procedure for making castings was as follows: The epoxy resin was charged to a three-necked flask equipped with a paddle stirrer. The contents of the flask were heated to 100° C to 110° C and stirred as the amine hardener was added as a fine powder. The stirring was continued until the dissolution of the hardener. The homogeneous solution was poured into a 500 ml beaker and kept in an oven at 100° C to 110° C. The mixture was degassed in the oven for 15 to 30 minutes for removal of air bubbles. It was then poured into a glass mold with a cavity of dimensions 3.2 x 177.8 x 177.8 mm and was cured as follows: 135° C for three hours and 179° C for two hours.

Resin castings were tested to determine tensile properties and glass transition temperature. Tensile properties were measured according to ASTM D-638 using a Type 1 dogbone specimen. Glass transition temperature (Tg) was measured by DuPont 981 Dynamic Mechanical Analyzer at a heating rate of 5° C/minute. The temperature corresponding to maximum peak point in the main damping transition was taken as Tg.

Table I summarizes the properties of unreinforced castings. These materials have high tensile strengths, high moduli and high strains-to-failure compared to castings of many other epoxy formulations.

TABLE I

Properties of Unreinforced Castings

| Casting Example | 15 | 16 | 17 | 18 | 19 | 20 | 21 |
|---|---|---|---|---|---|---|---|
| Resin Formulation Example | 1 | 2 | 3 | 4 | 5 | 6 | 7 |
| Tensile Strength (MPa) | 77.28 | 104.88 | 80.73 | 82.8 | 69 | 103.5 | 100.74 |
| Tensile Modulus (MPa) | 3250 | 3105 | 2760 | 3243 | 3588 | 3953.7 | 3767 |
| Elongation (%) | 3.9 | 7.0 | 5.2 | 5.6 | 2.6 | 4.4 | 6.4 |
| Tg (°C) | 222 | 197 | 170 | 113 | 222 | 176 | 115 |

TABLE I (con't)

Properties of Unreinforced Castings

| Casting Example | 22 | 23 | 24 | 25 | 26 | 27 | 28 |
|---|---|---|---|---|---|---|---|
| Resin Formulation Example | 8 | 9 | 10 | 11 | 12 | 13 | 14 |
| Tensile Strength ( MPa ) | 106.95 | 91.08 | 108.33 | 97.29 | 98.67 | 91.08 | -a |
| Tensile Modulus ( MPa ) | 4002 | 3450 | 3726 | 3153 | 3675 | 3622 | -a |
| Elongation (%) | 6.0 | 5.4 | 6.8 | 6.6 | 7.0 | 5.2 | -a |
| Tg (°C) | 164 | 138 | 173 | 184 | 123 | 112 | 122 |

a-Not determined

Examples 29 through 31 and control A describe the preparation of unidirectional epoxy/ graphite prepreg. In all cases prepreg thickness per ply was approximately 127-152.4 µm All prepregs were made with a PAN-based carbon fiber with a tensile strength of 45.5x $10^2$ MPa and a tensile modulus of 234.6 x $10^3$ MPa.

EXAMPLE 29

The resin formulation in Example 1 was prepared by adding the hardener to the epoxy resin over a 15 minute period while maintaining the mixture at 110 °C. The reaction was further continued for 100 minutes at 110 °C. The formulation was then cooled to 90 °C and poured into a pan on a resin coater; 76.2 mm wide 0.0254 mm thick film was coated at 90 °C on a saturated flat release paper. A 71.12 mm wide ribbon of

carbon fiber was passed through a heating chamber of the prepreg machine along with coated resin paper on top and bottom. The resin was melted on the fiber ribbon at 80° C to 85° C. The finished tape contained about 55 percent by weight of fiber.

Examples 30, 31 and Control

Unidirectional preimpregnated tape was prepared from the resin formulations in Examples 2 and 14. A control prepreg (Control A) was also made using a state-of-the-art epoxy prepreg formulation. The thermal history of each formulation and the properties of the prepregs are summarized in Table II.

Table II

| Example No. | 30 | 31 | Control A |
|---|---|---|---|
| Example for Resin Formulation | 2 | 14 | --[a] |
| Preadvancement Conditions | 100 min at 110°C | 105 min at 110°C | 60 min at ± 5°C |
| Tape properties (as made) | | | |
| Fiber content (wt%) | 55 | 60 | 55 |
| Width (mm) | 71.12 | 76.2 | 152.4 |

a N,N,N',N'-tetraglycidyl diamino diphenyl methane (100 parts by weight)
bisphenol A epoxy novolak[b] (13 parts)
4,4'diaminodiphenyl sulfone (32 parts)

b SU-8 from Celanese Polymer Specialty Co., Louisville, KY.

Examples 32 and 33 describe the preparation of cured laminates and their properties.

EXAMPLE 32

A unidirectional laminate was prepared by stacking eight plies of preimpregnated tape made in Example 29 in a mold, covering them with a Teflon-impregnated spacer and bleeder cloths, and enclosing them in a nylon bag. The entire assembly was placed in an autoclave and cured. A laminate was also made from the control prepreg, and from the prepreg of Example 31 (Example 33). The laminates were tested to determine longitudinal tensile and compressive properties. Tensile properties were measured according to ASTM-D3039. Compressive properties were measured using a modified ASTM-D695 procedure. Unidirectional graphite/epoxy tabs were added to prevent the sample ends from crushing in a noncompressive failure mode. A gauge length of approximately 4.83 mm was used. End tabs on compressive samples were adhered using FM-300 film adhesive (from American Cyanamid Company, Havre-de-Grace, MD), which was cured at 177° C for one hour. Table III summarizes laminate properties.

It is clear from this data that the prepreg composition of this invention affords composites with higher tensile and compressive properties than the Control.

TABLE III

Properties of Unidirectional Laminates

| Example | 32[c] | 33[c] | Control[d] |
|---|---|---|---|
| Prepreg Example | 29 | 31 | ---- |
| Longitudinal Properties[a] | | | |
| Tensile Strength ( MPa ) | 2236 | 2512 | 1877 |
| Tensile Modulus ( $10^3$ MPa)[b] | 136.6 | 148.4 | 138.7 |
| Strain-to-Failure (%) | 1.58 | 1.59 | 1.29 |
| Compressive Strength ( MPa ) at Room Temperature | 1670 | -[e] | 1518 |

a. Normalized to 60 volume percent fiber.

b. Measured between $25.4 \cdot 10^3$ and $152.4 \cdot 10^3$ micro-mmstrain.

c. Cure Schedule
Apply vacuum inside bag.
Heat autoclave from room temperature to 135°C at 2°C/min.
Apply 621 kPa to autoclave.
Hold at 135°C for three hours.
Heat autoclave from 135° to 179°C at 1°C/minute.
Hold at 179°C for two hours.

d. Cure schedule same as c) except 4 hour hold at 179°C

e. Not determined

EXAMPLES 34 AND 35

Examples 34 and 35 shown compressive strengths after impact of quasiisotropic laminates fabricated with the compositions of this invention. This test measures the damage tolerance of composites. The latter depends on the choice of matrix resin. All test specimens were made with PAN fiber prepregs and had dimensions of 152.4 mm x 101.6 mm x approximately 5.08 mm . They were impacted in the center with a Gardner type Impact Tester (Gardner Laboratories, Bethesda, Maryland) having a 15.87 mm diameter spherical indenter. The impact was normal to the plane of the fibers. When impacted, the laminate was simply supported over a 76.2 mm by 127 mm cutout in an aluminum plate with a plywood backup. After impact, it was tested for residual compressive strength in a steel fixture that constrained the edges of the sample from out-of-plane buckling.

In this test, residual compressive strengths decrease as the impact load increases. The preferred samples have the highest residual compressive strengths at an impact level of 68.1 kg/cm

It is clear from Table IV that the residual compressive strengths of laminates made with the compositions of this invention are significantly higher than that of the control. Thus, the compositions of this invention have improved damage tolerance.

The trade names in the description are regarded as Registered Trade Marks.

TABLE IV

Compressive Strength After 68.1 kg/cm Impact

| | | | |
|---|---|---|---|
| Example | 34 | 35 | Control |
| Prepreg Example | 29 | 30 | ---- |
| Cure Schedule[a] | I | I | II |
| Fiber Content (Vol. %) | 50.4 | 57.0 | 56.9 |
| Thickness (mm) | 5.18 | 4.42 | 5.21 |
| Layup | 32 ply[b] | 32 ply[b] | 36 ply[c] |
| Compressive Strength (kPa) | $173.2 \times 10^3$ | $193.2 \times 10^3$ | $142.8 \times 10^3$ |

a. Cure Schedule I
Apply vacuum inside bag.
Heat autoclave from room temperature to 135°C at 2°C/min.
Apply 621 kPa to autoclave.
Hold at 135°C for three hours.
Heat autoclave from 135°C to 179°C at 1°C/minute.
Hold at 179°C for two hours.
Cure Schedule II
Same as Cure Schedule I except for a 4 hr. hold at 179°C.

b. $(45/90/-45/0)_{4s}$

c. $[(\pm 45/0/90/0/90)_2/\pm 45/0/90/45)]_s$

## Claims

1. A composition comprising:
(a) an epoxy resin
(b) a diamine of the formula

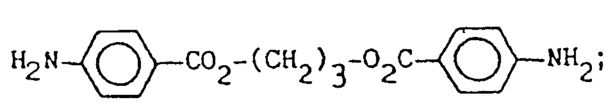 and

(c) a thermoplastic polymer.

2. The composition as defined in claim 1 wherein the epoxy resin is N, N, N', N' -tetraglycidyl-4,4'-diaminodiphenyl methane.

3. The composition as defined in claim 1 wherein the thermoplastic polymer is selected from one or more of a poly(aryl ether), a polyhydroxyether, a polycarbonate, a poly($\epsilon$-caprolactone), a polybutadiene/acrylonitrile copolymer, a polyester, an acrylonitrile/butadiene/styrene copolymer, a polyamide, a poly(amide imide), a polyolefin, a polyethylene oxide, a polybutyl methacrylate, an impact-modified polystyrene, a sulfonated polyethylene, a polyarylate, poly(2,6-dimethyl phenylene oxide), polyvinyl chloride and its copolymers, polyphenylene sulfide and a polyacetal.

4. The composition as defined in claim 1 wherein the thermoplastic polymer is a polysulfone.

5. The composition as defined in claim 1 wherein the thermoplastic polymer is a polyhydroxyether.

6. The composition as defined in claim 1 wherein the thermoplastic polymer is a polyetherimide.

7. The composition as defined in claims 1, 2 or 3, further including a non-siliceous fiber.

8. The composition as defined in claims 1, 2 or 3, further including a carbon or graphite fiber.

**Revendications**

1. Composition comprenant :
   (a) une résine époxy
   (b) une diamine de formule

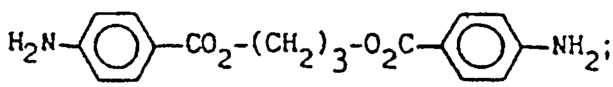 et

   (c) un polymère thermoplastique.

2. Composition suivant la revendication 1, dans laquelle la résine époxy est le N,N,N',N'-tétraglycidyl-4,4'-diaminodiphénylméthane.

3. Composition suivant la revendication 1, dans laquelle le polymère thermoplastique consiste en un ou plusieurs polymères choisis entre un poly(aryléther), un polyhydroxyéther, un polycarbonate, une poly-($\epsilon$-caprolactone), un copolymère polybutadiène/acrylonitrile, un polyester, un copolymère acrylonitrile/butadiène/styrène, un polyamide, un poly(amide-imide), une polyoléfine, un polyéthylène-oxyde, un polyméthacrylate de butyle, un polystyrène dont la résistance au choc est modifiée, un polyéthylène sulfoné, un polyarylate, un poly(2,6-diméthylphénylène-oxyde), un polychlorure de vinyle et ses copolymères, un polyphénylènesulfure et un polyacétal.

4. Composition suivant la revendication 1, dans laquelle le polymère thermoplastique est une polysulfone.

5. Composition suivant la revendication 1, dans laquelle le polymère thermoplastique est un polyhydroxyéther.

6. Composition suivant la revendication 1, dans laquelle le polymère thermoplastique est un polyétherimide.

7. Composition suivant les revendications 1, 2 ou 3, renfermant en outre une fibre non siliceuse.

8. Composition suivant les revendications 1, 2 ou 3, renfermant en outre une fibre de carbone ou de graphite.

**Ansprüche**

1. Zusammensetzung enthaltend:
   (a) ein Epoxyharz
   (b) ein Diamin der Formel:

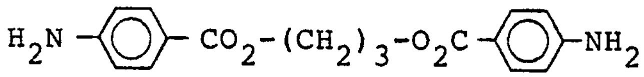

   und
   (c) ein thermoplastisches Polymer.

2. Zusammensetzung wie in Anspruch 1 definiert, in der das Epoxyharz N,N,N',N'-Tetraglycidyl-4,4'-diaminodiphenylmethan ist.

3. Zusammensetzung wie in Anspruch 1 definiert, bei der das thermoplastische Polymer ausgewählt wird aus ein oder mehreren der Verbindungen: einem Poly(arylether), einem Polyhydroxyether, einem Polycarbonat, einem Poly($\epsilon$-caprolacton), einem Polybutadien/Acrylnitril-Copolymer, einem Polyester, einem Acrylnitril/Butadien/Styrol-Copolymer, einem Polyamid, einem Poly(amidimid), einem Polyolefin, einem Polyethylenoxid, einem Polybutylmethacrylat, einem schlagmodifizierten Polystyrol, einem sulfonierten Polyethylen, einem Polyarylat, Poly(2,6-dimethylphenylen-oxid), Polyvinylchlorid und dessen Copolymeren, Polyphenylensulfid und einem Polyacetal.

4. Zusammensetzung wie in Anspruch 1 definiert, in der das thermoplastische Polymer ein Polysulfon ist.

5. Zusammensetzung wie in Anspruch 1 definiert, in der das thermoplastische Polymer ein Polyhydroxyether ist.

6. Zusammensetzung wie in Anspruch 1 definiert, in der das thermoplastische Polymer ein Polyetherimid ist.

7. Zusammensetzung wie in den Ansprüchen 1, 2 oder 3 definiert, die außerdem eine nicht siliziumhaltige Faser enthält.

8. Zusammensetzung wie in den Ansprüchen 1, 2 oder 3 definiert, die außerdem eine Kohlenstoff- oder Graphitfaser enthält.